(19) Europäisches Patentamt
European Patent Office
Office européen des brevets

(11) EP 4 063 469 B1

(12) EUROPEAN PATENT SPECIFICATION

(45) Date of publication and mention of the grant of the patent:
**31.12.2025 Bulletin 2026/01**

(21) Application number: **19953539.4**

(22) Date of filing: **20.11.2019**

(51) International Patent Classification (IPC):
***G06N 3/126*** (2023.01) ***C10J 3/72*** (2006.01)
***G06N 3/02*** (2006.01) ***C10J 3/48*** (2006.01)
*G06N 3/08* (2023.01) *G06N 20/00* (2019.01)

(52) Cooperative Patent Classification (CPC):
**C10J 3/72; C10J 3/482; G06N 3/126;**
C10J 2300/06; C10J 2300/0916; C10J 2300/0956; G06N 3/08; G06N 20/00

(86) International application number:
**PCT/CN2019/119704**

(87) International publication number:
**WO 2021/097709 (27.05.2021 Gazette 2021/21)**

# (54) DEVICE AND METHOD FOR REVERSE DESIGNING OF GASIFICATION PROCESS

VORRICHTUNG UND VERFAHREN ZUR UMKEHRKONSTRUKTION EINES VERGASUNGSPROZESSES

DISPOSITIF ET PROCÉDÉ DE CONCEPTION INVERSE D’UN PROCESSUS DE GAZÉIFICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.09.2022 Bulletin 2022/39**

(73) Proprietor: **Tianjin University**
**Tianjin 300354 (CN)**

(72) Inventors:
- **CHEN, Guanyi**
  **Jinnan District,**
  **Tianjin 300354 (CN)**
- **ZHAO, Sheng**
  **Jinnan District,**
  **Tianjin 300354 (CN)**
- **YAN, Beibei**
  **Jinnan District,**
  **Tianjin 300354 (CN)**
- **TAO, Junyu**
  **Jinnan District,**
  **Tianjin 300354 (CN)**
- **LI, Jian**
  **Jinnan District,**
  **Tianjin 300354 (CN)**
- **MA, Wenchao**
  **Jinnan District,**
  **Tianjin 300354 (CN)**
- **CHENG, Zhanjun**
  **Jinnan District,**
  **Tianjin 300354 (CN)**

(74) Representative: **Patentanwälte Geyer, Fehners & Partner mbB**
**Perhamerstrasse 31**
**80687 München (DE)**

(56) References cited:
**WO-A1-2009/157622 CN-A- 105 426 965**
**CN-A- 105 550 437 CN-A- 105 678 798**
**CN-A- 109 988 653 CN-A- 110 188 785**

- **SUNANDA DAS ET AL: "Optimal Set of Overlapping Clusters Using Multi-objective Genetic Algorithm", MACHINE LEARNING AND COMPUTING, ACM, 2 PENN PLAZA, SUITE 701 NEW YORK NY 10121-0701 USA, 24 February 2017 (2017-02-24), pages 232 - 237, XP058367350, ISBN: 978-1-4503-4817-1, DOI: 10.1145/3055635.3056653**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

## Technical Field

The present disclosure relates to the technical field of designing of a gasification process, and particularly to a device and a method for reverse designing of a gasification process.

## Background Art

Designing for a gasification process comprises three major parts: the design variables, the design objectives and the designing method. The designing method is the core part of the designing of the gasification process. Conventional designing methods may be classified into two kinds, i.e. empirical methods and trial and error methods.

The empirical methods are the most common methods, in which the designing is performed mainly by related parameters assumed on basis of the designer's experience in combination with related empirical formulas. Because of the complexity of the designing of the gasification process, it is very difficult for this method to treat multiple design objectives simultaneously. Further, in such methods, typically only the gasifier structure parameters can be designed, while the operation parameters cannot be designed.

In trial and error methods, the design variables which meet the design objectives are looked for mainly by simulating a large number of working conditions. Common simulation models include dynamic models, thermodynamic equilibrium models (TEMs) and artificial neural network (ANN) models. A dynamic model is complex, because many parameters need to be determined before the simulation. Therefore, it is less used in initial designing of a gasification process. TEM is a simple and feasible idealized model, in which multiple chemical reactions in the gasification process are assumed to reach chemical equilibrium states respectively when leaving the gasification reactor, and the results of the gasification reactions are predicted based on the mass conservation, energy conservation and chemical equilibrium analyses. This model is only related to the reactions in the gasifier, without taking the geometry of the gasifier into consideration. In the practical production, the reactants have limited reaction time in the gasifier, and typically a thermodynamic equilibrium cannot be reached in the gasifier. Therefore, a TEM can only provide an ideal gasification yield, and will result in a large error when it is used in the practical production. An ANN is an emerging intellectualized model, and is widely used due to its capacity of well solving the non-linear issues. In the case of ensuring the number and quality of the training samples and a rational network structure, an ANN may make high speed and accurate prediction on output parameters based on given input parameters. In recent years, an ANN is increasingly used in the field of biomass gasification. Although an ANN may ensure high prediction accuracy, it is difficult to determine the important input parameter "gasification temperature" during the design stage lacking experimental data. Therefore, the use of the ANN for predicting the gasification results is limited. Meanwhile, due to factors such as that the parameters in the designing of the gasification process are non-linear, the trial and error method has a heavy workload, and it is difficult to find the optimal design scheme.

The intelligent optimization algorithm comprises, for example, the genetic algorithm, and may be interpreted as a "reverse" algorithm, which may determine an optimal value of a design variable step by step according to the requirement on the design objective value. As compared with an empirical method, it has an advantage of being capable of taking multiple design objectives into consideration. As compared with a trial and error method, it has advantages of less calculation and higher efficiency. In the multiple-objective genetic algorithm (MOGA), the fitness function and the sorting rule for individuals in a population are the kernels for the algorithm. The fitness function establishes a mapping relation between an optimized variable and an objective to be optimized. For a gasification process, it may correspond to a gasification simulation model. The sorting for individuals in a population is the sorting for the design schemes (including the design variables and the design objectives). Since the designer has different requirement ranges and attention degrees on multiple design objectives of a gasification process, it is very difficult to determine the sorting rule for individuals in a population in the MOGA by a unified standard. The main problems in the application of the intelligent optimization algorithm and in the designing of a gasification process are those problems and limitations occurred when using the existing gasification simulation models in the initial designing of gasification processes, and how to determine the sorting method for individuals in the MOGA.

The existing methods for designing of a gasification process obtain multiple sets of design schemes, which are independent from each other. The designer must confront with the problem that which set of design scheme should be selected. Meanwhile, during the production and operation of a gasification apparatus, due to the influences of the production technology and the apparatus performances, it is very difficult for the gasification apparatus to accurately produce and operate according to the designed parameters. Therefore, during the designing method of a gasification process, it is necessary to take design margin into consideration.

SUNANDA DAS et al discloses a multi-objective genetic optimization process using non-dominated ranking of individuals and fuzzy clustering in "Optimal Set of Overlapping Clusters Using Multi-objective Genetic Algorithm", ISBN:

978-1-4503-4817-1, 2017-92-24, but does not relate to designing of a gasification process.

The Chinese application CN105678798A discloses a multi-target fuzzy clustering image segmentation method combining local spatial information, but does not relate to designing of a gasification process, either.

The Chinese application CN105426965A discloses a sorting method applied to multi-target interval genetic algorithm, but does not relate to designing of a gasification process, either.

The Chinese application CN109988653A discloses a genetic algorithm optimizing a gasification process.

Deb et al discloses a non-dominated fuzzy sorting method in "A fast and elitist multiobjective genetic algorithm: NSGA-II, IEEE TRANSACTIONS ON EVOLUTIONARY COMPUTATION, VOL. 6, NO. 2, APRIL 2002".

Chapter 8 of "Introduction to HPC with MPI for Data Science, Frank Nielsen, ISBN 978-3-319-21903-5 (eBook)" discloses a pedigree clustering method.

## Summary

In view of the above technical problems, the present disclosure provides a device and a method in accordance with independent claims 8 and 1, respectively.

Preferred embodiments of the invention are defined in the dependent claims.

## Brief Description of Drawings

Fig. 1 is a flow chart for a method for reverse designing of a gasification process according to the present disclosure.
Fig. 2 is a flow chart for the TEM-ANN model prediction method.
Fig. 3 is a flow chart for the non-dominated fuzzy sorting method.
Fig. 4 is a flow chart for the clustering analysis module.
Fig. 5 is a relative error distribution diagram for the prediction of components of the gasification-produced gas with various models in the examples of the present disclosure.
Fig. 6 is a curve showing the change of the number of the non-dominated individuals with the change of the generation number in the reverse design under the preference condition (1) in Example 2 of the present disclosure.
Fig. 7 is a pedigree diagram for the clustering analysis of the non-dominated individuals in the reverse design under the preference condition (1) in Example 2 of the present disclosure.

## Detailed Description

The present disclosure provides a method for reverse designing of a gasification process, in which the parameters for gasification are reversely designed according to the designer's requirements for the indicators of the produced gas, to obtain the optimal design scheme which meets the design objectives.

The present disclosure also provides a device for reversely designing a gasification process, comprising a product prediction module, a parameter optimization module, and a clustering analysis module, wherein the product prediction module ensures the accuracy of the design, the parameter optimization module increases the quality of the design and reduces the workload, and the clustering analysis module increases the practicability of the design. For example, the reverse design device of the present disclosure can be achieved by a combination of a memory and a processor, wherein the memory is configured to store a program for performing the method, and the processor is configured to execute the program stored in the memory. Here, the processor is, for example, a processor in a single chip computer, a desktop computer, a tablet computer, a laptop computer, a computer network, a programmable logic controller and the like.

As compared with conventional designing methods, the reverse designing method has broader requirements for the design variables and the design objectives, and more clear direction in the designing method, resulting in design results meeting the requirements for practical production better.

In order to make the objects, technical solutions and advantages of the present disclosure more clear and apparent, the present disclosure will be further described in detail below in combination with particular embodiments and with reference to the drawings.

Fig. 1 is a flow chart for the method for reverse designing of a gasification process according to the present disclosure. As shown in Fig. 1, an implementation of the present disclosure mainly comprises the following steps.

Step (1): Features of the raw material are determined. The features include industrial analysis data (water content, ash content, volatile content, and fixed carbon content), elemental analysis data (C%, H%, and O%), and the lower heating value of the raw material. The design requirements, i.e. the numerical ranges of design objectives, are determined. The numerical ranges of design objectives include the range for CO%, the range for the heating value of the produced gas, the range for the gas yield, the range for the gasification efficiency, and the degrees of preference for the objectives. In the design objectives, lower CO% is better, while higher heating value of the produced gas, gas yield and gasification efficiency are better. The design variables comprise the height of the gasifier, the inner diameter of the gasifier, the particle size of the raw material, the equivalence ratio, and the gasification temperature.

Step (2): Assumed values are assigned for the gasification efficiency, the equivalence ratio, the gasification temperature and the like according to the features of the raw material and the design requirements for the gasification. An initial design value of the inner diameter of the gasifier and a corresponding minimum height of the gasifier are calculated from the assumed values with an empirical formula. Initial values or ranges for the particle size of the raw material and the equivalence ratio are determined according to the experience or the user's assignment. A gasification temperature is calculated according to the TEM-ANN model in Step 3.

Step (3): The optimization ranges of the design variables for the reverse design are determined according to the initial values of the design variables obtained in Step 2. For example, ranges of ± 20% with respect to the design variables are taken as the optimization ranges. These ranges are used as initial optimization ranges for a multiple-objective genetic algorithm (MOGA). An initial population Pt with a size of N is randomly generated. In other words, multiple individuals, each of which comprises all design variable values, are obtained. The fitness for each individual is calculated with a TEM-ANN model and related formulas. In other words, corresponding design objective values are determined according to values of the design variables.

Step (4): The individuals in the population Pt are sorted by a non-dominated fuzzy sorting method. The operations of "selection, crossover and mutation" of a genetic algorithm are performed on the sorted population to generate a new population Qt. The population Pt is combined with the population Qt to make a transition group Rt. The individuals in the transition group Rt are sorted by a non-dominated fuzzy sorting method, and the top N dominant individuals are picked out and placed into a new population $P_{t+1}$. When the new population $P_{t+1}$ meets a convergence criteria set by the MOGA, the optimization method is ended, all non-dominated individuals are output, and Step 5 is performed. Otherwise, Step 4 is repeated.

Step (5): All the non-dominated individuals output in Step 4 are clustered by a pedigree clustering method with a fuzzy objective weight coefficient. Pseudo F-statistic (PSF) values for the last 5 steps of the clustering method are calculated. The clustering result with the maximum PSF value is selected. That is to say, the distances within the clusters should be as small as possible, and the distances between the clusters should be as large as possible. The maximum values and the minimum values of the respective design variables and the design objective values in each cluster are regarded as the upper limits and the lower limits of the intervals respectively. In other words, each cluster is regarded as a set composed of intervals of the respective design variables and the design objectives. 10-100 samples in the design variable intervals are randomly generated for each cluster. The design objective values of several samples in each cluster are calculated by a TEM-ANN model and related formulas, to check whether the design objective values of the several samples meet the design requirements. If the design objective values do not meet the design requirements, sampling and checking are further performed based on the result of the clustering step previous to the cluster. If the design objective values meet the design requirements, the upper limits and the lower limits of the design objective intervals are adjusted according to the design objective values of the several samples taken, and the average of the respective design objective values of the several samples in the cluster are calculated for serving as the representative of the cluster. The representatives of the respective clusters are sorted by a non-dominated fuzzy sorting method. The intervals of the cluster having the first ranked representative are the result of the reverse design, which includes the design variable intervals and corresponding predicted intervals for design objectives.

Detailed description of the steps is as follows.

1. Main design formulas, to which Step 2 relates, are (taking fluidized bed air gasification as an example):

$$E_{th} = Q_d \cdot f_{sec} \qquad (1)$$

$$F_g = \frac{E_{th}}{LHV_g} \qquad (2)$$

$$m_c = \frac{E_{th}}{LHV^t \cdot \eta_g} \qquad (3)$$

$$m_a = ER \cdot V_a \cdot m_c \qquad (4)$$

$$F_{at} = m_a \cdot \left( \frac{t_b + 273.15}{273.15} \right) \quad (5)$$

$$A_g = \frac{F_{at}}{V_{sg}} \quad (6)$$

$$D_r = \sqrt{\frac{4A_g}{\pi}} \quad (7)$$

$$h_r = 3000 \sim 5000 \quad (8)$$

wherein $E_{th}$ is the design power of the gasification reactor, in *kW*; $Q_d$ is the power practically needed by the designer, in *kW*; $f_{sec}$ is the security factor; $F_g$ is the flow rate of the produced gas, in $N_m{}^3/h$; $LHV_g$ is the lower heating value of the produced gas, in MJ/ Nm$^3$; $m_c$ is the feed rate, in *kg / h*; $LHV^t$ is the lower heating value of the raw material, in MJ/ *kg* ; $\eta_g$ is the gasification efficiency, in %; $m_a$ is the air flow rate, in $Nm^3/h$; *ER* is the equivalence ratio; $V_a$ is the theoretical air flow rate, in $Nm^3/h$; $F_{at}$ is the air flow rate corrected according to the bed temperature, in $N_m{}^3/h$; $t_b$ is the bed temperature, in °C; $A_g$ is the cross-sectional area of the reactor, in $m^2$; $V_{sg}$ is the gas flow velocity, in *m/s*; $D_r$ is the inner diameter of the reactor, in *mm* ; and $h_r$ is the height of the furnace, in *mm*.

2. The TEM-ANN model prediction method in Step 3 mainly comprises the following steps, and the flow chart is shown in Fig. 2.

Step (1): A number of practical working condition samples including the features of the raw material, the gasifier structure parameters, operation parameters and corresponding results of the gasification-produced gas are collected, to create a database, and the ANN are trained and checked with these samples.

Step (2): Features of the raw material, gasifier structure parameters, and operation parameters (except the gasification temperature) are given, and the gasification temperature is assumed (calculated) (which is assumed according to experience in the initial assumption). Concentrations of components of the gasification-produced gas under this working condition are obtained by the well-trained ANN.

Step (3): According to the mass-conservation equation and the concentrations of components of the gasification-produced gas obtained by the ANN, the mole numbers of the respective components of the product produced by the gasification of 1 mole of biomass raw material under the working condition are calculated. The gasification temperature is calculated by using the mole numbers of the respective components of the product and the energy-conservation equation.

Step (4): The difference between the gasification temperature obtained in Step 3 and the gasification temperature input into the ANN in Step 2 is calculated. If the difference is less than 1 K, the gasification temperature and the concentrations of components of the gas are output. Otherwise, Step 2 is performed again.

In addition, the heating value of the produced gas, the gas yield and the gasification efficiency may be obtained from the concentrations of components of the produced gas and the features of the raw material by simple calculation according to formulas.

$$LHV_g = 0.126 \cdot CO\% + 0.108 \cdot H_2\% + 0.359 \cdot CH_4\% \quad (9)$$

$$G_p = \frac{22.4\left(n_{CO_2} + n_{CO} + n_{CH_4} + n_{H_2} + n_{N_2}\right)}{M_b} \quad (10)$$

$$\eta_g = \frac{LHV_g \cdot G_p}{LHV^t} \quad (11)$$

wherein $G_p$ is the gas yield, in $Nm^3/kg$; $n_{CO_2}$, $n_{CO}$, $n_{CH_4}$, $n_{H_2}$ and $n_{N_2}$ are mole numbers of respective components of the gas produced by gasification of 1 mole of biomass raw material, and $M_b$ is the mass of 1 mole of biomass for gasification, in kg.

3. The main steps of the non-dominated fuzzy sorting method in Step 4 are as follows, and the flow chart is shown in Fig. 3.

Step (1): The population is divided into two sub-populations according to whether individuals (including values of the design variables and the design objective values) in the population meet the design requirements (i.e., whether the design objective values fall within ranges of the requirements).

Step (2): The sub-population 1, which meets the design requirements, is first subjected to non-dominated hierarchizing. Then the fuzzy objective weight coefficients and individual decision preference degrees are calculated. The individuals in each hierarchy are sorted from largest to smallest in term of the individual decision preference degree.

Step (3): The sub-population 2, which does not meet the design requirements, is first subjected to non-dominated hierarchizing. Then a fuzzy similarity relation among the individuals is established. A fuzzy similarity matrix is obtained from the fuzzy similarity relation. A sum of the elements in respective rows of the fuzzy similarity matrix is made, to obtain similarity degrees of respective individuals. The individuals in each hierarchy are sorted from smallest to largest in term of the similarity degree, to increase the diversity of solutions for the MOGA.

Step (4): The sub-population 1 and the sub-population 2 are combined, wherein the sub-population 1 is entirely placed before the sub-population 2, so as to finish the sorting of all the individuals.

Here, the non-dominated hierarchizing in Step 2 refers to selecting the non-dominated individuals (Pareto solutions) from the current population according to a non-dominated relation. Herein, the non-dominated relation is described by taking the maximization problem as an example. For any two individuals i and j:

(1) for any objective function c, if $c_i > c_j$, then it is said that i is superior to j, or i dominates j; and

(2) if i does not dominate j and j does not dominate i, then it is said that there is no difference between i and j.

A non-dominated individual refers to an individual which is not dominated by any other individual, and is characterized in that if one objective therein is increased, at least one other objective will inevitably be impaired. Once a group of non-dominated individuals is selected from the population, this group is used as one hierarchy and is excluded from the population. Then, the next group of non-dominated individuals is selected, until there is no individual in the population, and then the non-dominated hierarchizing is ended.

The calculation process of the fuzzy objective weight coefficient is as follows.

Step (1): A preference relation is defined, as shown in Table 1.

Table 1: Preference Relation and Meaning Thereof

| Relation | Meaning |
|---|---|
| $\approx$ | Design objective 1 is as important as design objective 2 |
| $\prec$ | Design objective 1 is less important than design objective 2 |
| $\prec\prec$ | Design objective 1 is much less important than design objective 2 |

Step (2): An m×m matrix R is established, and the equivalence relation formulas below is determined:

$$\begin{cases} c_i \prec\prec c_j \Leftrightarrow \mathbf{R}(i,j)=\alpha, \mathbf{R}(j,i)=\beta \\ c_i \prec c_j \Leftrightarrow \mathbf{R}(i,j)=\gamma, \mathbf{R}(j,i)=\delta \\ c_i \approx c_j \Leftrightarrow \mathbf{R}(i,j)=0.5, \mathbf{R}(j,i)=0.5 \end{cases} \quad (12)$$

wherein $c_i$ and $c_j$ are design objectives, m is the number of the design objectives, $\alpha+\beta=\gamma+\delta=1$, $0<\alpha<\gamma<\delta<\beta<1$, $\alpha$, $\beta$, $\gamma$ and $\delta$ may be assumed to be 0.05, 0.95, 0.35 and 0.65 respectively, and all numbers on the principal diagonal of the matrix R are 0.5.

Step (3): For each $c_i \in$ C , a normalized fuzzy objective weight coefficient is calculated according to the formula below:

$$\omega(c_i)=\frac{S_L(c_i,\mathbf{R})}{\sum_{c_j\in\mathbf{C}} S_L(c_j,\mathbf{R})} \quad (13)$$

wherein C is the set of design objectives, $\omega(c_i)$ is the fuzzy objective weight coefficient for the design objective $c_i$, and $S_L$

(c,,R) or $S_L(c_j,\mathbf{R})$ is the sum of numbers in Row i or Row j except the numbers in the principal diagonal of the matrix R.

The formula for the individual decision preference degree is:

$$u_k = \frac{1}{1+\left\{\frac{\sum_{i=1}^{m}\left[\omega(c_i)(1-r_{ik})\right]^p}{\sum_{i=1}^{m}\left[\omega(c_i)(r_{ik})\right]^p}\right\}^{\frac{2}{p}}} \quad (14)$$

wherein $u_k$ is the individual decision preference degree, $r_{ik}$ is a relative preference degree for a design objective $c_i$ of an individual k, and p is set to 2.

Before calculating the individual decision preference degree, it is necessary to calculate the relative preference degree first.

For an objective, for which greater is better, the relative preference degree formula is:

$$r_{ik} = \frac{x_{ik} - \underset{k}{\wedge} x_{ik}}{\underset{k}{\vee} x_{ik} - \underset{k}{\wedge} x_{ik}} \quad (15)$$

For an objective, for which less is better, the relative preference degree formula is:

$$r_{ik} = \frac{\underset{k}{\vee} x_{ik} - x_{ik}}{\underset{k}{\vee} x_{ik} - \underset{k}{\wedge} x_{ik}} \quad (16)$$

In the formulas, $x_{ik}$ represents the normalized value for the design objective $c_i$ of the individual k, and $\vee$ and $\wedge$ are a symbol for acquiring the maximum value and a symbol for acquiring the minimum value, respectively.

The fuzzy similarity matrix in Step 3 is:

$$h(s,\ v) = \begin{cases} 1, & s = v \\ e^{-\sum_{i=1}^{m}|x_{is}-x_{iv}|}, & s \neq v \end{cases} \quad (17)$$

wherein $h(s, v)$ is an element in the fuzzy similarity matrix, i.e. the fuzzy similarity relation between the individual s and the individual v, $x_{is}$ represents the normalized value for a design objective $c_i$ of the individual *s*, and $x_{iv}$ represents the normalized value for a design objective $c_i$ of the individual *v* .

4. Detailed flow chart of Step 5 is shown in Fig. 4, where the core formula of the pedigree clustering method with a fuzzy objective weight coefficient, which is the formula of the distance between individuals (clusters), uses a Euclidean distance formula based on a fuzzy preference, and is:

$$d_\omega = \sqrt{\sum_{l}^{t} \omega_l \left(f_{il} - f_{jl}\right)^2} \quad (18)$$

wherein $d_\omega$ is the Euclidean distance with a fuzzy objective weight coefficient, l is the unified serial number for the design variables (except the gasification temperature) and the design objectives in an individual, t is the total number of the design variables and the design objectives in an individual, $\omega_l$ is the weight coefficient, the design objective weight coefficient is $\omega_l = \omega(c_i) \times \frac{m}{t}$, and the design variable weight coefficients are all $\omega_l = \frac{1}{t}$, and $f_{il}$ or $f_{jl}$ is the normalized value of the No. 1 design variable or design objective for the individual i or j.

The formula of PSF value is:

$$PSF = \frac{(T - P_G)/(G-1)}{P_G/(n-G)} \quad (19)$$

*n* is the total number of the individuals, G is the number of current clusters, *T* is the sum of deviation squares for all the individuals, and $P_G$ is a sum of sums of squares within clusters.

$$P_G = \sum_{v=1}^{G} S_v \quad (20)$$

$$S_v = \sum_{i \in G_v} \sum_{l=1}^{t} (f_{il} - \overline{f_{vl}})^{\mathrm{T}} (f_{il} - \overline{f_{vl}}) = \sum_{i \in G_v} \sum_{l=1}^{t} \left\| f_{il} - \overline{f_{vl}} \right\|^2 \quad (21)$$

$$T = \sum_{i=1}^{n} \sum_{l=1}^{t} (f_{il} - \overline{f_l})^T (f_{il} - \overline{f_l}) = \sum_{i=1}^{n} \sum_{l=1}^{t} \left\| f_{il} - \overline{f_l} \right\|^2 \quad (22)$$

wherein v is a serial number of the cluster, $S_V$ is a sum of squares within a cluster, and $G_V$ is a cluster with a serial number of v.

1. Evaluation on the performance of the prediction according to the TEM-ANN model

For particular embodiments of the present disclosure, 38 experiment examples of bubbling fluidized bed air gasification in 5 literatures are selected, and the information on the experiment examples of the literatures are show in Table 2.

Table 2: Information on experiment examples in literatures

| LTR | MAT | Water % | Ash % | Volatile % | Fixed carbon % | C% | H% | 0% | $LHV^t$ MJ/kg | PS mm | ID mm | GH mm | ER |
|---|---|---|---|---|---|---|---|---|---|---|---|---|---|
| 1 | Wood chips | 5.66 | 0.77 | 79.29 | 14.27 | 48.69 | 5.62 | 44.02 | 17.97 | 0.29 | 300 | 3680 | 0.23-0.34 |
| 2 | Rice hull | 12.1 | 17.6 | 58.4 | 12 | 37.6 | 5.42 | 36.56 | 14.67 | 0.38 | 255 | 2700 | 0.25-0.35 |
| 3 | Pine wood chips | 19-25 | 0.77-0.81 | 61.5-66.42 | 12.38-13.37 | 50 | 5.7 | 44.1 | 18.5 | 0.6 | 60 | 700 | 0.26-0.47 |
| 4 | Rubber wood chips | 8.5 | 1.01 | 81.34 | 9.15 | 46.4 | 5.7 | 47.7 | 15.8 | 7 | 300 | 2500 | 0.32-0.43 |
| 5 | Wood chips | 6.18 | 0.41 | 78.98 | 14.43 | 46.5 | 5.54 | 41.4 | 17.2 | 6 | 150 | 4500 | 0.21-0.43 |

Note: LTR: Literature; MAT: Material; ID: inner diameter; GH: gasifier height; ER: equivalence ratio.

The specific operation process of the present disclosure in particular implementations will be described below.
The steps of TEM calculation was as follows:

Step (1): inputting the elemental analysis, the water content, the LHVt and the equivalence ratio of the raw material;
Step (2): assuming (calculating) a gasification temperature $T_i$, where in this example, the gasification temperatures for the 38 experiment examples are all set at 800 K, and solving a set of equations consisted of the mass-conversation equations and the chemical equilibrium constant equations for elements C, H and O, to obtain mole numbers of components in a gas produced by gasification of 1 mole of biomass raw material under the working condition;
Step (3): substituting the mole numbers of components of the produced gas obtained in Step 2 into the energy-conversation equation, to obtain the equilibrium temperature $T_{eq}$ by solve the equation; and
Step (4): repeating the iterative computation (the same as the TEM-ANN model).

The ANN model was established as follows.
The parameters input into the ANN in the 38 examples comprised C%, H%, O%, water content, volatile content, fixed carbon content, ash content, particle size, gasifier height, inner diameter, equivalence ratio, and gasification temperature. In order to improve the prediction accuracy of the ANN, 4 ANNs were established, wherein each ANN corresponded to one of the output parameters $CO_2$%, CO%, $H_2$% and $CH_4$% respectively. There were 234 training samples in total. Because the gasification temperature, which is an important input variable for the ANN, cannot be predicted by the ANN, the gasification temperature predicted by the TEM was used as the input to the ANN in the present example.
The TEM-ANN model was established as follows.
4 well-trained ANNs were coupled to the TEM as shown in Fig. 1 for calculation, and the initial gasification temperature was assumed to be 800 K.
Here, Fig. 5 is a relative error distribution diagram for the prediction of components of the gasification-produced gas with various models. As can be clearly seen from the figure, the TEM-ANN model achieves the minimum overall errors for the prediction of components of all the gasification-produced gases, as well as the minimum error fluctuation range. That is, both the prediction accuracy and the robustness of the TEM-ANN model are the best among the three kinds of models.
The relative prediction errors for the gasification temperature and the concentrations of components of the produced gases are shown in Table 3. For the TEM-ANN model, the error for the prediction of the gasification temperature was 7.20%, and the mean error for the prediction of the concentrations of components of the gasification-produced gases was 8.82%. As compared with the TEM prediction method, the error for the gasification temperature was reduced by 5.41%, and the errors for the prediction of components of various gasification-produced gases were all reduced, with an average reduction of 11.94%. As compared with the ANN prediction method, also, the errors for the prediction of components of various gasification-produced gases were all reduced, with an average reduction of 7.03%. Therefore, the TEM-ANN model prediction method provided in the present disclosure has notable practicability and innovativeness.

Table 3: Relative errors for various prediction methods

| Prediction method | Gasification Temperature | $CO_2$% | $CH_4$% | CO% | $H_2$% | Components of produced gas Mean error |
|---|---|---|---|---|---|---|
| TEM | 12.61% | 17.39% | 22.41% | 19.35% | 23.90% | 20.76% |
| ANN model | - | 14.18% | 16.73% | 14.63% | 17.87% | 15.85% |
| TEM-ANN model | 7.20% | 5.07% | 9.72% | 8.54% | 11.94% | 8.82% |

2. Example for the reverse design of a gasification process

Design object: the design of a bubbling fluidized bed air gasification process with a biomass;

Design variables: the inner diameter of the gasifier, the gasifier height, the equivalence ratio, the particle size, and the gasification temperature;

Design objectives: CO% should be minimized and not more than 20%; the heating value of the produced gas should be maximized and not less than 4000 kJ/$Nm^3$; the gas yield should be maximized and not less than 1 $Nm^3$/kg; and the

gasification efficiency should be maximized and not less than 50%.

The preferences of the objectives (taking 4 kinds of preferences as an example):

(1) CO% ≈ the heating value of the produced gas ≈ the gas yield ≈ the gasification efficiency;
(2) CO% ≈ the gas yield ≈ the gasification efficiency < the heating value of the produced gas;
(3) CO% ≈ the gasification efficiency < the gas yield ≈ the heating value of the produced gas; and
(4) CO% ≈ the gasification efficiency < the gas yield << the heating value of the produced gas;
wherein the preference (1) is a control group, in which there is no preference.

The features of the biomass raw materials are shown in Table 4.

Table 4: The features of the raw material of the design example

| Material | Water content % | Ash content % | Volatile content % | Fixed carbon content % | C% | H% | 0% | LHV$^t$ (MJ/kg) |
|---|---|---|---|---|---|---|---|---|
| Wood chips | 6.18 | 0.41 | 78.98 | 14.43 | 46.5 | 5.54 | **41.4** | 17.2 |

When determining the initial values of the design variables, it was assumed that the feed rate was 70 kg/h, the heating value of the produced gas was 5 MJ/Nm$^3$, the gasification efficiency was 75%, the equivalence ratio was 0.22, the gas flow velocity was 0.7 m/s, and the gasification temperature was 800 °C.

The initial value of the design variable was calculated according to the empirical formula, to obtain an inner diameter of the gasifier of 373 mm.

The optimization ranges of the design variables in the MOGA were determined as follow: the inner diameter of the gasifier: 200-600 mm, the gasifier height: 3000-5000 mm, the equivalence ratio: 0.2-0.4, and the particle size: 0.1-10 mm. The gasification temperature was calculated through the TEM-ANN model.

The design variables were optimized by the MOGA and the non-dominated fuzzy sorting method. It was set in the MOGA that the population size N was 80, the individual crossover probability was 0.8, the mutation probability was 0.1, and the convergence condition was that the generation number was greater than 10. The non-dominated individuals in the optimization result were subjected to the clustering analysis, and the result was checked and sorted.

The reverse designing method was implemented by Python programming, and the computing times for the 4 kinds of preferences were all within 20 seconds. Fig. 6 is a curve showing the change of the number of the non-dominated individuals with the change of the generation number in the reverse design under the preference condition (1). Fig. 7 is a pedigree diagram for the clustering analysis of the non-dominated individuals in the reverse design under the preference condition (1). The finally obtained reverse design results are shown in Table 5.

Table 5: Reverse design results

| Preference | Design variable | | | | | Design objective | | | |
|---|---|---|---|---|---|---|---|---|---|
| | Inner diameter (mm) | Bed height (mm) | Particle size (mm) | Equivalence ratio | Gasification temperature (°C) | CO% | Heating value of produced gas (kJ/$Nm^3$) | Gas yield ($Nm^3$/kg) | Gasification efficiency % |
| (1) | 446-474 | 4941-5017 | 3.2-3.5 | 0.26-0.31 | 973-983 | 14.5-16.2 | 5286-5857 | 1.68-2.00 | 58-70 |
| (2) | 518-533 | 4753-4867 | 2.7-3.5 | 0.20-0.23 | 792-825 | 17.3-17.8 | 6259-6727 | 2.05-2.11 | 62-69 |
| (3) | 524-538 | 4221-4414 | 3.0-4.0 | 0.22-0.32 | 867-871 | 14.3-16.4 | 5292-6402 | 2.12-2.41 | 53-75 |
| (4) | 526-545 | 3573-3682 | 5.0-5.7 | 0.21-0.22 | 922-983 | 13.0-14.6 | 5362-6845 | 2.04-2.07 | 53-69 |

As can be seen from Table 5, in the design results, the heating value of the produced gas for the preference (2) was significantly increased as compared with the preference (1) control group, the heating value of the produced gas and the gas yield for the preference (3) were significantly increased as compared with the preference (1), the heating value of the produced gas and the gas yield for the preference (4) were significantly increased as compared with the preference (1), and the increase in the heating value of the produced gas for the preference (4) was more significantly than that for the preference (3). As can be seen, the reverse design results were highly consistent with the designer's preference.

In summary, as compared with conventional designing methods, the device and the method for reverse designing of a gasification process according to the present disclosure at least have one of the following advantageous effects over prior art.

(1) As compared with conventional designs, the reverse design has broader requirements for the design objectives, more comprehensive design variables, and more clear direction in the designing method, resulting in design results meeting the design requirements better and greatly reduced workload. Also, no well-experienced designers are required.

(2) As compared with the prediction with the TEM model or the ANN model alone, the TEM-ANN model prediction method used in the produced gas prediction module is more applicable for different working conditions, and has higher accuracy.

(3) The parameter optimization module aims at the design requirements and the designer's preference, and optimizes the design variables with the MOGA and the non-dominated fuzzy sorting method to approach the optimal design variables step by step. The designing method is more individualized, and the workload is reduced.

(4) The clustering analysis module integrates discrete optimal design variable values and corresponding design objective values into a plurality of optimal design variable value internal and corresponding design objective value interval, such that the design results meet the requirements for the practical production better.

As can be seen from above, in the reverse designing method according to the present disclosure, the TEM-ANN model makes the design results more accurate, the multiple-objective genetic algorithm makes the designing method more efficient, the non-dominated fuzzy sorting method make the design results more individualized, and the clustering analysis module makes the design results more beneficial for practical production applications.

The above particular embodiments are used for describing the objects, technical solutions and advantageous effects of the present disclosure in detail. It should be understood that the above embodiments are only some particular embodiments of the present disclosure.

## Claims

**1.** A computer-implemented method for reverse designing of a gasification process, wherein the method is used to obtain one or more design variable intervals and one or more design objective intervals from one or more design requirements, the design variable intervals and the one or more design objective intervals to be used in designing a gasification process, the gasification process being a process for converting carbon-containing raw material to syngas, **characterized by** comprising following steps:

Step 1: at beginning of design, pre-determining one or more features of a biomass raw material of the gasification process and the one or more design requirements of the gasification process, wherein the one or more features of the biomass raw material are one or more features of the carbon-containing raw material, wherein the one or more design requirements are one or more numerical ranges of one or more design objectives, wherein the one or more design objectives include at least one of CO%, heating value of produced gas, gas yield and gasification efficiency, the one or more numerical ranges of one or more design objectives include at least one of a range for CO%, a range for the heating value of the produced gas, a range for the gas yield, a range for the gasification efficiency, or a degree of preference for the objectives;

Step 2: giving one or more assumed values of the one or more design variables according to the one or more features of the biomass raw material and one or more design requirements determined in Step 1, and obtaining one or more initial values of the one or more design variables by calculation using the one or more assumed values and one or more empirical formulas, wherein the one or more design variables include at least one of a height of a gasifier, an inner diameter of the gasifier, a particle size of the raw material, an equivalence ratio, and a gasification temperature;

Step 3: determining one or more optimization ranges of the one or more design variables for reverse designing according to the one or more initial values of the one or more design variables obtained in Step 2, using the one or more optimization ranges as one or more optimization ranges for a multiple-objective genetic algorithm, generating an initial population Pt with a size of N in the one or more optimization ranges randomly to obtain a plurality of individuals comprising all of the one or more design variables, wherein all of one or more values of the one or more design variables in each individual are generated randomly in the one or more optimization ranges, and

calculating corresponding one or more values of the one or more design objective, as a fitness for each individual with a thermodynamic equilibrium model-artificial neural network model, TEM-ANN, and related formulas according to the one or more values of the one or more design variables, wherein the one or more values of the one or more design objective include at least one of CO%, a heating value of produced gas, a gas yield value and a gasification efficiency value, wherein the TEM-ANN model performs calculation by following substeps:

Substep 31: collecting practical working condition samples including the one or more features of the raw material, a gasifier structure parameter, an operation parameter and a corresponding gasification-produced gas result, establishing a database, and training and checking the ANN with the practical working condition samples, to obtain a trained ANN;

Substep 32: inputting given one or more features of the raw material, gasifier structure parameter, and operation parameter to the trained ANN, and assuming a gasification temperature $T_i$, to calculate concentrations of components of gasification-produced gas;

Substep 33: according to a mass-conservation equation and the concentrations of components of the gasification-produced gas obtained by the ANN, obtaining mole numbers of respective components of the produced gas produced by gasification of 1 mole of the biomass raw material, and calculating an equilibrium gasification temperature $T_{eq}$ by using the mole numbers of the respective components of the produced gas and an energy-conservation equation;

Substep 34: if a difference between $T_{eq}$ and $T_I$ is less than 1 K, outputting the $T_{eq}$ and the concentrations of components of the produced gas, wherein the concentrations of components of the produced gas include CO%, $H_2$% and $CH_4$%; otherwise, going back to Substep 32, in which an average value of $T_{eq}$ and $T_i$ is used as a new $T_i$ being used in calculation;

Substep 35: calculating the heating value of the produced gas, the gas yield and the gasification efficiency by the related formulas from the concentrations of components of the produced gas output from Substep 34 and features of the biomass raw material, and the related formulas are:

$$LHV_g = 0.126 \cdot CO\% + 0.108 \cdot H_2\% + 0.359 \cdot CH_4\% \quad ;$$

$$G_p = \frac{22.4\left(n_{CO_2} + n_{CO} + n_{CH_4} + n_{H_2} + n_{N_2}\right)}{M_b} \quad ;$$

$$\eta_g = \frac{LHV_g \cdot G_p}{LHV^t} \quad ;$$

wherein

$LHV_g$ is a lower heating value,
$G_p$ is a gas yield, in a unit of $Nm^3 / kg$ ,
$n_{CO_2}$, $n_{CO}$, $n_{CH_4}$, $n_{H_2}$ and $n_{N_2}$ are mole numbers of the respective components of the gas produced by gasification of 1 mole of biomass raw material,
$M_b$ is mass of 1 mole of the biomass raw material for gasification in a unit of kg,
$\eta_g$ is gasification efficiency, $LHV^t$ is a lower heating value of the biomass raw material;

Step 4: sorting the individuals in the initial population Pt obtained in Step 3 by a non-dominated fuzzy sorting method, performing operations of "selection, crossover and mutation" of a genetic algorithm on the sorted population to generate a new population Qt, combining the initial population Pt with the new population Qt to make a transition group Rt, sorting individuals in the transition group Rt by the non-dominated fuzzy sorting method, picking top N dominant individuals out and putting them into a new population $P_{t+1}$, and outputting all non-dominated individuals and performing Step 5 when the new population $P_{t+1}$ meets a convergence criteria set by the multiple-objective genetic algorithm, otherwise repeating Step 4; and

Step 5: clustering all the non-dominated individuals output in Step 4 by a pedigree clustering method with a fuzzy objective weight coefficient, calculating PSF values for the last 5 steps of the clustering method, selecting a clustering result with a maximum PSF value, regarding each cluster as a set composed of intervals of the respective design variables and design objectives, generating 10-100 samples in the set of design variable intervals for each cluster randomly, performing verification by the TEM-ANN model prediction method, adjusting one or more design objective intervals, and finally sorting different clusters by the non-dominated fuzzy sorting method, to obtain the one or more design variable intervals and the one or more design objective intervals which meet the one or more design requirements best, wherein PSF is a pseudo F statistic.

2. The computer-implemented method for reverse designing of a gasification process according to claim 1, **characterized in that** in Step 1, the one or more features of the biomass raw material comprise industrial analysis data, elemental analysis data, and a lower heating value of the raw material, wherein the industrial analysis data comprise water content, ash content, volatile content and fixed carbon content, and the elemental analysis data comprise C%, H% and O%.

3. The computer-implemented method for reverse designing of a gasification process according to claim 1, **characterized in that** in Step 4, the non-dominated fuzzy sorting method comprises following steps:

dividing the population into two sub-populations according to whether individuals in the population, including the one or more values of the one or more design variables and the one or more values of the one or more design objectives, meet the one or more design requirements, wherein the individuals meet the design requirements when the design objective values fall within ranges of the requirements, while the individuals do not meet the design requirements when the design objective values do not fall within ranges of the requirements;
first subjecting a sub-population 1 which meets the one or more design requirements to non-dominated hierarchizing, then calculating a fuzzy objective weight coefficient and an individual decision preference degree, and sorting the individuals in each hierarchy from largest to smallest in term of the individual decision preference degree;
then subjecting a sub-population 2 which does not meet the one or more design requirements to non-dominated hierarchizing, then establishing a fuzzy similarity relation among the individuals, obtaining a fuzzy similarity matrix from the fuzzy similarity relation, making a sum of elements in respective rows of the fuzzy similarity matrix to obtain similarity degrees of respective individuals, and sorting the individuals in each hierarchy from smallest to largest in term of the similarity degree, to increase a diversity of solutions for the multiple-objective genetic algorithm; and
combining the sub-population 1 with the sub-population 2, wherein the entire sub-population 1 is sorted in front of the sub-population 2, so as to finish sorting of all the individuals.

4. The computer-implemented method for reverse designing of a gasification process according to claim 3, **characterized in that** a calculation process for the fuzzy objective weight coefficient is as follows:

defining a preference relation, in which "≈" represents that design objective 1 is as important as design objective 2, "≺" represents that design objective 1 is less important than design objective 2, and "≺≺"represents that design objective 1 is much less important than design objective 2; and
establishing an m×m matrix R, and determining equivalence relation formulas below:

$$\begin{cases} c_i \prec\prec c_j \Leftrightarrow \mathbf{R}(i,j)=\alpha, \mathbf{R}(j,i)=\beta \\ c_i \prec c_j \Leftrightarrow \mathbf{R}(i,j)=\gamma, \mathbf{R}(j,i)=\delta \\ c_i \approx c_j \Leftrightarrow \mathbf{R}(i,j)=0.5, \mathbf{R}(j,i)=0.5 \end{cases};$$

wherein $c_i$ and $c_j$ are design objectives, m is a number of the design objectives, $\alpha+\beta=\gamma+\delta=1$, $0<\alpha<\gamma<\delta<\beta<1$, and all numbers in a principal diagonal of the matrix R are 0.5; and
for each $c_i \in C$, calculating a normalized fuzzy objective weight coefficient according to the formula below:

$$\omega(c_i)=\frac{S_L(c_i,\mathbf{R})}{\sum_{c_j \in \mathbf{C}} S_L(c_j,\mathbf{R})};$$

wherein C is a set of design objectives, $\omega(c_i)$ is the fuzzy objective weight coefficient for the design objective $c_i$, and $S_L(c_i,\mathbf{R})$ or $S_L(c_j,R)$ is a sum of numbers in Row i or Row j except numbers in the principal diagonal of the matrix R.

**5.** The computer-implemented method for reverse designing of a gasification process according to claim 3, **characterized in that** a formula of the individual decision preference degree is:

$$u_k = \frac{1}{1+\left\{\frac{\sum_{i=1}^{m}\left[\omega(c_i)(1-r_{ik})\right]^p}{\sum_{i=1}^{m}\left[\omega(c_i)(r_{ik})\right]^p}\right\}^{\frac{2}{p}}};$$

wherein $u_k$ is the individual decision preference degree, $r_{ik}$ is a relative preference degree for a design objective $c_i$ of an individual k, and p is set to 2;
calculation formulas for the relative preference degree are as follows:

for an objective, for which greater is better, the relative preference degree formula is:

$$r_{ik} = \frac{x_{ik} - \bigwedge_k x_{ik}}{\bigvee_k x_{ik} - \bigwedge_k x_{ik}};$$

for an objective, for which less is better, the relative preference degree formula is:

$$r_{ik} = \frac{\bigvee_k x_{ik} - x_{ik}}{\bigvee_k x_{ik} - \bigwedge_k x_{ik}};$$

wherein $x_{ik}$ represents a normalized value for the design objective $c_i$ of the individual k, and v and $\wedge$ are a symbol for acquiring the maximum value and a symbol for acquiring the minimum value respectively.

**6.** The computer-implemented method for reverse designing of a gasification process according to claim 3, **characterized in that** the fuzzy similarity matrix is:

$$h(s,\ v) = \begin{cases} 1, & s = v \\ e^{-\sum_{i=1}^{m}|x_{is}-x_{iv}|}, & s \neq v \end{cases}$$

wherein *h (s,* v) is an element in the fuzzy similarity matrix, which is a fuzzy similarity relation between a design scheme s and a design scheme v, $x_{is}$ represents a normalized value for a design objective $c_i$ of the design scheme *s* , and $x_{iv}$ represents a normalized value for a design objective $c_i$ of the design scheme *v*.

**7.** The computer-implemented method for reverse designing of a gasification process according to claim 1, **characterized in that** a calculation formula for the PSF value in Step 5 is:

$$PSF = \frac{(T-P_G)/(G-1)}{P_G/(n-G)};$$

wherein PSF is a pseudo F statistic, *n* is a total number of the individuals, G is a number of current clusters, T is a sum of deviation squares for all the individuals, and $P_G$ is a sum of sums of squares within clusters.

8. A device adapted to perform the computer-implemented method for reverse designing of a gasification process according to any one of claims 1-7 to obtain one or more design variable intervals and one or more design objective intervals from one or more design requirements.

**Patentansprüche**

1. Computerimplementiertes Verfahren zum Reverse Design eines Vergasungsprozesses, wobei das Verfahren verwendet wird, um ein oder mehrere Designvariablenintervalle und ein oder mehrere Designzielintervalle aus einer oder mehreren Designanforderungen zu erhalten, wobei die Designvariablenintervalle und die ein oder mehrere Designzielintervalle beim Design eines Vergasungsprozesses verwendet werden, wobei der Vergasungsprozess ein Prozess zur Umwandlung von kohlenstoffhaltigem Rohmaterial in Synthesegas ist, **gekennzeichnet durch** die folgenden Schritte:

    Schritt 1: Vorab festgelegen eines oder mehrere Merkmale eines Biomasse-Rohmaterials des Vergasungsprozesses und der einen oder mehreren Designanforderungen des Vergasungsprozesses zu Beginn des Designs, wobei die eine oder mehreren Merkmale des Biomasse-Rohmaterials ein oder mehrere Merkmale des kohlenstoffhaltigen Rohmaterials sind, wobei die eine oder mehreren Konstruktionsanforderungen ein oder mehrere numerische Bereiche eines oder mehrerer Designziele sind, wobei die eine oder mehreren Designziele mindestens eines der folgenden Elemente umfassen: CO%-Gehalt, Heizwert des erzeugten Gases, Gasausbeute und Vergasungseffizienz, wobei der eine oder die mehreren numerischen Bereiche eines oder mehrerer Designziele mindestens einen Bereich für CO%, einen Bereich für den Heizwert des erzeugten Gases, einen Bereich für die Gasausbeute, einen Bereich für die Vergasungseffizienz oder einen Präferenzgrad für die Ziele umfassen;
    Schritt 2: Zuweisen eines oder mehrerer angenommener Werte der einen oder mehreren Designvariablen gemäß den einen oder mehreren Merkmalen des Biomasse-Rohmaterials und den einen oder mehreren in Schritt 1 festgelegten Designanforderungen, und Ermitteln eines oder mehrerer Anfangswerte der einen oder mehreren Designvariablen durch Berechnung unter Verwendung der einen oder mehreren angenommenen Werte und einer oder mehrerer empirischer Formeln, wobei die eine oder mehreren Designvariablen mindestens einen der folgenden Werte umfassen: ein Höhe eines Vergasers, ein Innendurchmesser des Vergasers, ein Partikelgröße des Rohmaterials, ein Äquivalenzverhältnis und ein Vergasungstemperatur;
    Schritt 3: Bestimmen eines oder mehrerer Optimierungsbereiche der einen oder mehreren Designvariablen für das Reverse Design gemäß den einen oder mehreren Anfangswerten der einen oder mehreren Designvariablen, die in Schritt 2 erhalten wurden, wobei die einen oder mehreren Optimierungsbereiche als ein oder mehrere Optimierungsbereiche für einen genetischen Algorithmus mit mehreren Zielen verwendet werden, Erzeugen einer Anfangspopulation Pt mit einer Größe von N in den einen oder mehreren Optimierungsbereichen nach dem Zufallsprinzip, um eine Vielzahl von Individuen zu erhalten, die alle die eine oder mehreren Designvariablen umfassen, wobei alle einen oder mehrere Werte der einen oder mehreren Designvariablen in jedem Individuum zufällig in den einen oder mehreren Optimierungsbereichen erzeugt werden, und Berechnen eines entsprechenden einen oder mehreren Wertes der einen oder mehreren Designziele als Fitness für jedes Individuum mit einem thermodynamischen Gleichgewichtsmodell-künstlichen neuronalen Netzwerkmodell, TEM-ANN und zugehörigen Formeln gemäß den einen oder mehreren Werten der einen oder mehreren Designvariablen berechnet werden, wobei die einen oder mehreren Werte der einen oder mehreren Designziele mindestens einen der folgenden Werte umfassen: CO%, Heizwert des erzeugten Gases, Gasausbeute und Vergasungseffizienz, wobei das TEM-ANN-Modell die Berechnung anhand der folgenden Teilschritte durchführt:

        Teilschritt 31: Sammeln von Daten zu praxisbezogenen Arbeitsbedingungen, einschließlich eines oder mehrerer Merkmale des Rohmaterials, eines Parameters der Vergaserstruktur, eines Betriebsparameters und eines entsprechenden Ergebnisses der durch Vergasung erzeugten Gasmenge, Erstellen einer Datenbank und Trainieren und Überprüfen der ANN mit den Daten zu den praxisbezogenen Arbeitsbedingungen, um eine trainierte ANN zu erhalten;
        Teilschritt 32: Eingabe eines oder mehrerer vorgegebener Merkmale des Rohmaterials, des Parameters der Vergasungsanlage und des Betriebsparameters in das trainierte ANN und Annahme einer Vergasungstemperatur $T_i$, um die Konzentrationen der Bestandteile des durch Vergasung erzeugten Gases zu berechnen;
        Teilschritt 33: Ermitteln der Molzahlen der jeweiligen Bestandteile des durch Vergasung von 1 Mol des Biomasse-Rohmaterials erzeugten Gases gemäß einer Massenerhaltungsgleichung und den durch das ANN ermittelten Konzentrationen der Bestandteile des durch Vergasung erzeugten Gases und Berechnen einer Gleichgewichtsvergasungstemperatur $T_{eq}$ unter Verwendung der Molzahlen der jeweiligen Bestandteile des erzeugten Gases und einer Energieerhaltungsgleichung;
Teilschritt 34: Wenn die Differenz zwischen $T_{eq}$ und $T_l$ weniger als 1 K beträgt, Ausgabe von $T_{eq}$ und den Konzentrationen der Bestandteile des erzeugten Gases, wobei die Konzentrationen der Bestandteile des erzeugten Gases CO%, $H_2$% und $CH_4$% umfassen; andernfalls Rückkehr zu Teilschritt 32, in dem ein Mittelwert von $T_{eq}$ und $T_i$ als neues $T_i$ verwendet wird, das in der Berechnung verwendet wird;
Teilschritt 35: Berechnen des Heizwerts des erzeugten Gases, der Gasausbeute und der Vergasungseffizienz anhand der entsprechenden Formeln aus den Konzentrationen der Bestandteile des in Teilschritt 34 ausgegebenen erzeugten Gases und den Eigenschaften des Biomasse-Rohmaterials, wobei die entsprechenden Formeln lauten:

$$LHV_g = 0.126 \cdot CO\% + 0.108 \cdot H_2\% + 0.359 \cdot CH_4\% \quad ;$$

$$G_p = \frac{22.4\left(n_{CO_2} + n_{CO} + n_{CH_4} + n_{H_2} + n_{N_2}\right)}{M_b} \quad ;$$

$$\eta_g = \frac{LHV_g \cdot G_p}{LHV^t} \quad ;$$

wobei

$LHV_g$ der untere Heizwert ist,
$G_p$ die Gasausbeute in der Einheit $Nm^3$ ist,
$n_{CO_2}$, $n_{CO}$, $n_{CH_4}$, $n_{H_2}$ und $n_{N_2}$ die Molzahlen der jeweiligen Bestandteile des durch Vergasung von 1 Mol Biomasse-Rohmaterial erzeugten Gases sind,
$M_b$ die Masse von 1 Mol des zur Vergasung bestimmten Biomasse-Rohmaterials in der Einheit kg ist,
$\eta_g$ die Vergasungseffizienz ist, $LHV^t$ der untere Heizwert des Biomasse-Rohmaterials ist;

Schritt 4: Sortieren der Individuen in der in Schritt 3 erhaltenen Anfangspopulation Pt durch ein nicht-dominantes Fuzzy-Sortierverfahren, Durchführen von Operationen der "Selektion, Kreuzung und Mutation" eines genetischen Algorithmus auf die sortierte Population, um eine neue Population Ot zu erzeugen, Kombinieren der Anfangspopulation Pt mit der neuen Population $Q_t$, um eine Übergangsgruppe Rt zu bilden, Sortieren der Individuen in der Übergangsgruppe Rt durch das nicht-dominante Fuzzy-Sortierverfahren, Auswahl der N dominantesten Individuen und Einordnung in eine neue Population $P_{t+1}$, Ausgabe aller nicht-dominanten Individuen und Durchführung von Schritt 5, wenn die neue Population $P_{t+1}$ ein vom genetischen Algorithmus mit mehreren Zielen festgelegtes Konvergenzkriterium erfüllt, andernfalls Wiederholung von Schritt 4; und
Schritt 5: Clustern aller in Schritt 4 ausgegebenen nicht-dominanten Individuen durch eine Stammbaum-Clustering-Methode mit einem Fuzzy-Zielgewichtungskoeffizienten, Berechnen der PSF-Werte für die letzten 5 Schritte der Clustering-Methode, Auswählen eines Clustering-Ergebnisses mit einem maximalen PSF-Wert, Betrachten jedes Clusters als eine Menge, die aus Intervallen der jeweiligen Designvariable und Designziel besteht, Zufällige Erzeugung von 10 bis 100 Stichproben in der Menge der Designvariable-Intervalle für jeden Cluster, Durchführung einer Verifizierung durch die TEM-ANN-Modellvorhersagemethode, Anpassung eines oder mehrerer Designzielintervalle und schließlich Sortierung verschiedener Cluster durch das nicht-dominante Fuzzy-Sortierverfahren, um das eine oder die mehrere Designvariable-Intervalle und das eine oder die mehrere Designzielintervalle zu erhalten, die die eine oder die mehrere Designanforderungen am besten erfüllen, wobei PSF eine Pseudo-F-Statistik ist.

**2.** Computerimplementiertes Verfahren, das zum Reverse Design eines Vergasungsprozesses gemäß Anspruch 1 computerimplementiert ist, **gekennzeichnet durch** das Fehlen jeglicher Kennzeichnung, wobei in Schritt 1 die eine oder mehrere Eigenschaften des Biomasse-Rohmaterials industrielle Analysedaten, Elementanalysedaten und einen unteren Heizwert des Rohmaterials umfassen, wobei die industriellen Analysedaten den Wassergehalt, den Aschegehalt, den Gehalt an flüchtigen Bestandteilen und den Gehalt an festem Kohlenstoff umfassen und die Elementanalysedaten C%, H% und O% umfassen.

3. Computerimplementiertes Verfahren, das zum Reverse Design eines Vergasungsprozesses gemäß Anspruch 1 computerimplementiert ist, **gekennzeichnet dadurch, dass** in Schritt 4 das nicht-dominante Fuzzy-Sortierverfahren die folgenden Schritte umfasst:

Aufteilen der Population in zwei Unterpopulationen danach, ob Individuen in der Population, einschließlich des einen oder der mehreren Werte der einen oder mehreren Designvariablen und des einen oder der mehreren Werte der einen oder mehreren Designziele, die eine oder die mehreren Designanforderungen erfüllen, wobei die Individuen die Designanforderungen erfüllen, wenn die Designzielwerte innerhalb der Bereiche der Anforderungen liegen, während die Individuen die Designanforderungen nicht erfüllen, wenn die Designzielwerte nicht innerhalb der Bereiche der Anforderungen liegen;
erstes Unterziehen einer Teilpopulation 1, die die eine oder mehreren Designanforderungen erfüllt, einer nicht-dominanten Hierarchisierung, dann Berechnen eines Fuzzy-Zielgewichtungskoeffizienten und eines individuellen Entscheidungspräferenzgrades und Sortieren der Individuen in jeder Hierarchie vom größten zum kleinsten in Bezug auf den individuellen Entscheidungspräferenzgrad;
dann Unterziehen einer Unterpopulation 2, die die eine oder mehrere Designanforderungen nicht erfüllt, einer nicht-dominanten Hierarchisierung, dann Herstellen einer Fuzzy-Ähnlichkeitsbeziehung zwischen den Individuen, Erhalten einer Fuzzy-Ähnlichkeitsmatrix aus der Fuzzy-Ähnlichkeitsbeziehung, Bilden einer Summe der Elemente in den jeweiligen Zeilen der Fuzzy-Ähnlichkeitsmatrix, um Ähnlichkeitsgrade der jeweiligen Individuen zu erhalten, und Sortieren der Individuen in jeder Hierarchie vom kleinsten zum größten Ähnlichkeitsgrad, um die Vielfalt der Lösungen für den Mehrziel-Genetischen Algorithmus zu erhöhen; und
Kombinieren der Teilpopulation 1 mit der Teilpopulation 2, wobei die gesamte Teilpopulation 1 vor der Teilpopulation 2 sortiert wird, um die Sortierung aller Individuen abzuschließen.

4. Computerimplementiertes Verfahren, das zum Reverse Design eines Vergasungsprozesses gemäß Anspruch 3 computerimplementiert ist, **gekennzeichnet durch** einen Berechnungsprozess für den Fuzzy-Zielgewichtungskoeffizienten wie folgt:

Definieren einer Präferenzrelation, wobei "≈" bedeutet, dass das Designziel 1 genauso wichtig ist wie das Designziel 2, "≺" bedeutet, dass das Designziel 1 weniger wichtig ist als das Designziel 2, und "≺≺" bedeutet, dass das Designziel 1 viel weniger wichtig ist als das Designziel 2; und
Erstellen einer m×m-Matrix R und Bestimmen der folgenden Äquivalenzrelationsformeln:

$$\begin{cases} c_i \prec\prec c_j \Leftrightarrow \mathbf{R}(i,j)=\alpha, \mathbf{R}(j,i)=\beta \\ c_i \prec c_j \Leftrightarrow \mathbf{R}(i,j)=\gamma, \mathbf{R}(j,i)=\delta \\ c_i \approx c_j \Leftrightarrow \mathbf{R}(i,j)=0.5, \mathbf{R}(j,i)=0.5 \end{cases};$$

wobei $c_i$ und $c_j$ Designziele sind, m die Anzahl der Designziele ist, $\alpha + \beta = y + \delta = 1$, $0 < \alpha < \gamma < \delta < \beta < 1$, und alle Zahlen in einer Hauptdiagonalen der Matrix R 0,5 sind; und
für jedes $c_i \in \mathbf{C}$ Berechnung eines normalisierten Fuzzy-Zielgewichtungskoeffizienten gemäß der folgenden Formel:

$$\omega(c_i) = \frac{S_L(c_i, \mathbf{R})}{\sum_{c_j \in \mathbf{C}} S_L(c_j, \mathbf{R})};$$

wobei C eine Menge von Designzielen ist, $\omega(c_i)$ der Fuzzy-Zielgewichtungskoeffizient für das Designziel ist $c_i$ und $S_L(c_i,\mathbf{R})$ oder $S_L(c_j, \mathbf{R})$ eine Summe der Zahlen in Zeile i oder Zeile j mit Ausnahme der Zahlen in der Hauptdiagonalen der Matrix R ist.

5. Computerimplementiertes Verfahren, das zur Rückwärtskonstruktion eines Vergasungsprozesses gemäß Anspruch 3 computerimplementiert ist, **gekennzeichnet dadurch, dass** eine Formel für den individuellen Entscheidungspräferenzgrad lautet:

$$u_k = \frac{1}{1+\left\{\frac{\sum_{i=1}^{m}\left[\omega(c_i)(1-r_{ik})\right]^p}{\sum_{i=1}^{m}\left[\omega(c_i)(r_{ik})\right]^p}\right\}^{\frac{2}{p}}};$$

wobei $u_k$ der individuelle Entscheidungspräferenzgrad ist, $r_{ik}$ ein relativer Präferenzgrad für ein Designziel $c_i$ eines Individuum k ist und p auf 2 gesetzt ist;
die Berechnungsformeln für den relativen Präferenzgrad lauten wie folgt:

für ein Ziel, für das größer besser ist, lautet die Formel für den relativen Präferenzgrad:

$$r_{ik} = \frac{x_{ik} - \bigwedge_k x_{ik}}{\bigvee_k x_{ik} - \bigwedge_k x_{ik}};$$

für ein Ziel, für das weniger besser ist, lautet die Formel für den relativen Präferenzgrad:

$$r_{ik} = \frac{\bigvee_k x_{ik} - x_{ik}}{\bigvee_k x_{ik} - \bigwedge_k x_{ik}};$$

wobei $x_{ik}$ einen normierten Wert für das Designziel $c_i$ des Individuum k darstellt und $\vee$ und $\wedge$ jeweils ein Symbol für das Erreichen des Maximalwerts und ein Symbol für das Erreichen des Minimalwerts sind.

6. Computerimplementiertes Verfahren, das zum Reverse Design eines Vergasungsprozesses gemäß Anspruch 3 computerimplementiert ist, **gekennzeichnet durch** die Fuzzy-Ähnlichkeitsmatrix, die wie folgt lautet:

$$h(s,\ v) = \begin{cases} 1, & s = v \\ e^{-\sum_{i=1}^{m}|x_{is}-x_{iv}|}, & s \neq v \end{cases}$$

wobei $h(s, v)$ ein Element in der Fuzzy-Ähnlichkeitsmatrix ist, die eine Fuzzy-Ähnlichkeitsbeziehung zwischen einem Entwurfsschema s und einem Entwurfsschema v, $x_{is}$ darstellt, einen normierten Wert für ein Designziel $c_i$ des Entwurfsschemas s, und $x_{iv}$ darstellt und einen normierten Wert für ein Designziel $c_i$ des Entwurfsschemas v darstellt.

7. Computerimplementiertes Verfahren, das zur Rückwärtskonstruktion eines Vergasungsprozesses gemäß Anspruch 1 computerimplementiert ist, **gekennzeichnet durch** eine Berechnungsformel für den PSF-Wert in Schritt 5:

$$PSF = \frac{(T-P_G)/(G-1)}{P_G/(n-G)};$$

wobei PSF eine Pseudo-F-Statistik ist, n die Gesamtzahl der Individuen ist, G die Anzahl der aktuellen Cluster ist, T die Summe der Abweichungsquadrate für alle Individuen ist und $P_G$ die Summe der Summen der Quadrate innerhalb der Cluster ist.

8. Vorrichtung, die dazu ausgelegt ist, das computerimplementierte Verfahren zum Reverse-Design eines Vergasungsprozesses gemäß einem der Ansprüche 1 bis 7 durchzuführen, um aus einer oder mehreren Designanforderungen ein oder mehrere Designvariablenintervalle und ein oder mehrere Designzielintervalle zu erhalten.

## Revendications

**1.** Procédé mis en œuvre par ordinateur pour la conception inverse d'un procédé de gazéification, dans lequel Procédé est utilisé pour obtenir un ou plusieurs intervalles de variables de conception et un ou plusieurs intervalles d'objectifs de conception à partir d'une ou plusieurs exigences de conception, les intervalles de variables de conception et le ou les intervalles d'objectifs de conception devant être utilisés dans la conception d'un procédé de gazéification, Procédé de gazéification étant un procédé de conversion d'une matière première contenant du carbone en gaz de synthèse, **caractérisé en ce qu'**il comprend les étapes suivantes :

Étape 1: au début de la conception, prédéterminer une ou plusieurs caractéristiques d'une matière première biomasse du procédé de gazéification et la ou les exigences de conception du procédé de gazéification, dans lequel la ou les caractéristiques de la matière première biomasse sont une ou plusieurs caractéristiques de la matière première contenant du carbone, dans lequel la ou les exigences de conception sont une ou plusieurs plages numériques d'un ou plusieurs objectifs de conception, dans lequel le ou les objectifs de conception comprennent au moins l'un parmi le pourcentage de CO, la valeur calorifique du gaz produit, le rendement en gaz et l'efficacité de gazéification, les plages numériques d'un ou plusieurs objectifs de conception comprennent au moins l'une des plages suivantes : une plage pour le CO%, une plage pour la valeur calorifique du gaz produit, une plage pour le rendement en gaz, une plage pour l'efficacité de gazéification, ou un degré de préférence pour les objectifs ;
Étape 2: attribuer une ou plusieurs valeurs supposées à une ou plusieurs variables de conception en fonction d'une ou plusieurs caractéristiques de la matière première biomasse et d'une ou plusieurs exigences de conception déterminées à l'étape 1, et obtenir une ou plusieurs valeurs initiales de la ou des variables de conception par calcul à l'aide de la ou des valeurs supposées et d'une ou plusieurs formules empiriques, dans lesquelles la ou les variables de conception comprennent au moins l'une parmi une hauteur d'un gazéificateur, un diamètre intérieur du gazéificateur, une taille de particule de la matière première, un rapport d'équivalence et une température de gazéification ;
Étape 3: déterminer une ou plusieurs plages d'optimisation d'une ou plusieurs variables de conception pour la conception inverse en fonction d'une ou plusieurs valeurs initiales d'une ou plusieurs variables de conception obtenues à l'étape 2, en utilisant une ou plusieurs plages d'optimisation comme une ou plusieurs plages d'optimisation pour un algorithme génétique à objectifs multiples, générer une population initiale $P_t$ d'une taille N dans une ou plusieurs plages d'optimisation de manière aléatoire afin d'obtenir une pluralité d'individus comprenant toutes les variables de conception, dans lequel toutes les valeurs de la ou des variables de conception dans chaque individu sont générées de manière aléatoire dans la ou les plages d'optimisation, et calculer une ou plusieurs valeurs correspondantes de la ou des cibles de conception, en tant qu'aptitude pour chaque individu avec un modèle d'équilibre thermodynamique-modèle de réseau neuronal artificiel, TEM-ANN, et des formules associées en fonction de la ou des valeurs de la ou des variables de conception, dans lequel la ou les valeurs de la ou des cibles de conception comprennent au moins l'une parmi le CO%, la valeur calorifique du gaz produit, la valeur du rendement en gaz et la valeur du rendement de gazéification, dans lequel le modèle TEM-ANN effectue le calcul en suivant les sous-étapes suivantes :

Sous-étape 31: collecter des échantillons de conditions de travail pratiques comprenant une ou plusieurs caractéristiques de la matière première, un paramètre de structure du gazéificateur, un paramètre de fonctionnement et un résultat correspondant de gaz produit par gazéification, établir une base de données, et former et vérifier le réseau ANN avec les échantillons de conditions de travail pratiques, afin d'obtenir un réseau ANN formé ;
Sous-étape 32: saisie d'une ou plusieurs caractéristiques données de la matière première, du paramètre de structure du gazéificateur et du paramètre de fonctionnement dans le réseau ANN entraîné, et en supposant une température de gazéification $T_i$, calcul des concentrations des composants du gaz produit par gazéification ;
Sous-étape 33: selon une équation de conservation de masse et les concentrations des composants du gaz produit par gazéification obtenues par le réseau neuronal artificiel, obtenir les nombres de moles des composants respectifs du gaz produit par gazéification d'une mole de matière première biomasse, et calculer une température de gazéification d'équilibre $T_{eq}$ en utilisant les nombres de moles des composants respectifs du gaz produit et une équation de conservation d'énergie ;
Sous-étape 34: si la différence entre $T_{eq}$ et $T_l$ est inférieure à 1 K, sortie de la $T_{eq}$ et des concentrations des composants du gaz produit, les concentrations des composants du gaz produit comprenant CO%, $H_2$% et $CH_4$%; sinon, retour à la sous-étape 32, dans laquelle une valeur moyenne de $T_{eq}$ et $T_i$ est utilisée comme nouvelle Ti utilisée dans le calcul ;

Sous-étape 35: calculer le pouvoir calorifique du gaz produit, le rendement en gaz et le rendement de gazéification à l'aide des formules correspondantes à partir des concentrations des composants du gaz produit obtenues à la sous-étape 34 et des caractéristiques de la matière première biomasse, les formules correspondantes étant les suivantes :

$$LHV_g = 0.126 \cdot CO\% + 0.108 \cdot H_2\% + 0.359 \cdot CH_4\% \quad ;$$

$$G_p = \frac{22.4\left(n_{CO_2} + n_{CO} + n_{CH_4} + n_{H_2} + n_{N_2}\right)}{M_b} \quad ;$$

$$\eta_g = \frac{LHV_g \cdot G_p}{LHV^t} \quad ;$$

où

$LHV_g$ est le pouvoir calorifique inférieur,
$G_p$ est le rendement en gaz, en unité de $Nm^3/kg$,
$n_{CO2}$, $n_{CO}$ , $n_{CH4}$, $n_{H2}$ et $n_{N2}$ et sont les nombres de moles des composants respectifs du gaz produit par gazéification d'une mole de matière première biomasse,
$M_b$ est la masse d'une mole de matière première biomasse pour la gazéification en unité de kg,
$\eta_g$ est le rendement de gazéification, $LHV^t$ est le pouvoir calorifique inférieur de la matière première biomasse ;

Étape 4: trier les individus de la population initiale $P_t$ obtenue à l'étape 3 par une méthode de tri flou non dominé, effectuer des opérations de« sélection, croisement et mutation »d'un algorithme génétique sur la population triée pour générer une nouvelle population $Q_t$, combiner la population initiale Pt avec la nouvelle population $Q_t$ pour former un groupe de transition Rt, trier les individus du groupe de transition $R_t$ par la méthode de tri flou non dominé, sélectionner les N individus dominants supérieurs et les placer dans une nouvelle population $P_{t+1}$, et sortir tous les individus non dominés et effectuer l'étape 5 lorsque la nouvelle population $P_{t+1}$ répond à un critère de convergence défini par l'algorithme génétique multi-objectifs, sinon répéter l'étape 4; et
Étape 5: regrouper tous les individus non dominés générés à l'étape 4 à l'aide d'une méthode de regroupement généalogique avec un coefficient de pondération objectif flou, calculer les valeurs PSF pour les 5 dernières étapes de la méthode de regroupement, sélectionner un résultat de regroupement avec une valeur PSF maximale, en considérant chaque regroupement comme un ensemble composé d'intervalles des variables de conception et des objectifs de conception respectifs, générer de manière aléatoire 10 à 100 échantillons dans l'ensemble d'intervalles de variables de conception pour chaque cluster, effectuer une vérification par la méthode de prédiction du modèle TEM-ANN, ajuster un ou plusieurs intervalles d'objectifs de conception, et enfin trier les différents clusters par la méthode de tri flou non dominé, afin d'obtenir le ou les intervalles de variables de conception et le ou les intervalles d'objectifs de conception qui répondent le mieux à la ou aux exigences de conception, où PSF est une statistique pseudo-F.

**2.** Procédé mis en œuvre par ordinateur étant mis en œuvre par ordinateur pour la conception inverse d'un procédé de gazéification selon la revendication 1, **caractérisé en ce que**, à l'étape 1, la ou les caractéristiques de la matière première biomasse comprennent des données d'analyse industrielle, des données d'analyse élémentaire et un pouvoir calorifique inférieur de la matière première, dans lequel les données d'analyse industrielle comprennent la teneur en eau, la teneur en cendres, la teneur en matières volatiles et la teneur en carbone fixe, et les données d'analyse élémentaire comprennent C%, H% et O%.

**3.** Procédé mis en œuvre par ordinateur pour la conception inverse d'un procédé de gazéification selon la revendication 1, **caractérisé en ce que**, à l'étape 4, Procédé de tri flou non dominé comprend les étapes suivantes :

diviser la population en deux sous-populations selon que les individus de la population, y compris la ou les valeurs de la ou des variables de conception et la ou les valeurs de la ou des cibles de conception, satisfont à la ou aux exigences de conception, les individus satisfaisant aux exigences de conception lorsque les valeurs des cibles de conception se situent dans les plages des exigences, tandis que les individus ne satisfont pas aux exigences de conception lorsque les valeurs des cibles de conception ne se situent pas dans les plages des exigences ;

soumettre d'abord une sous-population 1 qui satisfait à la ou aux exigences de conception à une hiérarchisation non dominée, puis calculer un coefficient de pondération d'objectif flou et un degré de préférence de décision individuel, et trier les individus dans chaque hiérarchie du plus grand au plus petit en termes de degré de préférence de décision individuel ;

soumettre ensuite une sous-population 2 qui ne satisfait pas à une ou plusieurs exigences de conception à une hiérarchisation non dominée, puis établir une relation de similarité floue entre les individus, obtenir une matrice de similarité floue à partir de la relation de similarité floue, faire la somme des éléments dans les lignes respectives de la matrice de similarité floue pour obtenir les degrés de similarité des individus respectifs, et en triant les individus dans chaque hiérarchie du plus petit au plus grand en termes de degré de similarité, afin d'augmenter la diversité des solutions pour l'algorithme génétique multi-objectifs; et

en combinant la sous-population 1 avec la sous-population 2, dans laquelle toute la sous-population 1 est triée avant la sous-population 2, afin de terminer le tri de tous les individus.

**4.** Procédé mis en œuvre par ordinateur étant mis en œuvre par ordinateur pour la conception inverse d'un procédé de gazéification selon la revendication 3, **caractérisé en ce que** le processus de calcul du coefficient de pondération flou de l'objectif est le suivant :

définir une relation de préférence, dans laquelle <<≈>> représente que l'objectif de conception 1 est aussi important que l'objectif de conception 2, « $\prec$ » représente que l'objectif de conception 1 est moins important que l'objectif de conception 2, et « $\prec\prec$ » représente que l'objectif de conception 1 est beaucoup moins important que l'objectif de conception 2 ; et

établir une matrice m×m R, et déterminer les formules de relation d'équivalence ci-dessous :

$$\begin{cases} c_i \prec\prec c_j \Leftrightarrow \mathbf{R}(i,j)=\alpha, \mathbf{R}(j,i)=\beta \\ c_i \prec c_j \Leftrightarrow \mathbf{R}(i,j)=\gamma, \mathbf{R}(j,i)=\delta \\ c_i \approx c_j \Leftrightarrow \mathbf{R}(i,j)=0.5, \mathbf{R}(j,i)=0.5 \end{cases} ;$$

Où $\boldsymbol{c_i}$ et $\boldsymbol{c_j}$ sont des objectifs de conception, m est un nombre d'objectifs de conception, $\alpha + \beta = y + \delta = 1$, $0 < \alpha < y < \delta < \beta < 1$, et tous les nombres dans une diagonale principale de la matrice R sont 0,5 ; et

pour chaque , calculer un coefficient de pondération d'objectif flou normalisé selon la formule ci-dessous :

$$\omega(c_i) = \frac{\mathrm{S_L}(c_i, \mathbf{R})}{\sum_{c_j \in \mathbf{C}} \mathrm{S_L}(c_j, \mathbf{R})} ;$$

où C est un ensemble d'objectifs de conception, $\omega(\boldsymbol{c_i})$ est le coefficient de pondération flou de l'objectif pour l'objectif de conception , $\boldsymbol{c_i}$, et $S_L(\boldsymbol{c_i}, \boldsymbol{R})$ ou $S_L(\boldsymbol{c_j}, \boldsymbol{R})$ est une somme des nombres de la ligne i ou de la ligne j, à l'exception des nombres de la diagonale principale de la matrice R.

**5.** Procédé mis en œuvre par ordinateur étant mis en œuvre par ordinateur pour la conception inverse d'un procédé de gazéification selon la revendication 3, **caractérisé en ce que** la formule du degré de préférence de décision individuel est :

$$u_k = \frac{1}{1 + \left\{ \dfrac{\sum_{i=1}^{m} \left[ \omega(c_i)(1 - r_{ik}) \right]^p}{\sum_{i=1}^{m} \left[ \omega(c_i)(r_{ik}) \right]^p} \right\}^{\frac{2}{p}}} ;$$

où $u_k$ est le degré de préférence de décision individuel, $r_{ik}$ est un degré de préférence relatif pour un objectif $\boldsymbol{c_i}$ de

conception d'un individu k, et p est fixé à 2 ;
les formules de calcul du degré de préférence relatif sont les suivantes :
pour un objectif pour lequel plus est mieux, la formule du degré de préférence relatif est :

$$r_{ik} = \frac{x_{ik} - \underset{k}{\wedge} x_{ik}}{\underset{k}{\vee} x_{ik} - \underset{k}{\wedge} x_{ik}} \quad ;$$

pour un objectif pour lequel moins est mieux, la formule du degré de préférence relatif est :

$$r_{ik} = \frac{\underset{k}{\vee} x_{ik} - x_{ik}}{\underset{k}{\vee} x_{ik} - \underset{k}{\wedge} x_{ik}} \quad ;$$

où $x_{ik}$ représente une valeur normalisée pour l'objectif $c_i$ de conception de l'individu k, et $\vee$ et $\wedge$ sont respectivement un symbole pour acquérir la valeur maximale et un symbole pour acquérir la valeur minimale.

**6.** Procédé mis en œuvre par ordinateur pour la conception inverse d'un procédé de gazéification selon la revendication 3, **caractérisé en ce que** la matrice de similarité floue est :

$$h(s, \quad v) = \begin{cases} 1, & s = v \\ e^{-\sum_{i=1}^{m} |x_{is} - x_{iv}|}, & s \neq v \end{cases}$$

où $h(s, v)$ est un élément de la matrice de similarité floue, qui est une relation de similarité floue entre un schéma de conception s et un schéma de conception v, $x_{is}$ représente une valeur normalisée pour un objectif de conception $c_i$ du schéma de conception $s$ , et $x_{iv}$ représente une valeur normalisée pour un objectif $c_i$ de conception du schéma de conception v.

**7.** Procédé mis en œuvre par ordinateur pour la conception inverse d'un procédé de gazéification selon la revendication 1, **caractérisé en ce que** la formule de calcul de la valeur PSF à l'étape 5 est :

$$PSF = \frac{(T - P_G)/(G - 1)}{P_G/(n - G)} ;$$

où PSF est une statistique pseudo F, $n$ est le nombre total d'individus, G est le nombre de grappes actuelles, $T$ est la somme des carrés des écarts pour tous les individus, et $P_G$ est la somme des carrés au sein des grappes.

**8.** Dispositif adapté pour mettre en œuvre le procédé informatique de conception inverse d'un processus de gazéification selon l'une quelconque des revendications 1 à 7 afin d'obtenir un ou plusieurs intervalles de variables de conception et un ou plusieurs intervalles d'objectifs de conception à partir d'une ou plusieurs exigences de conception.

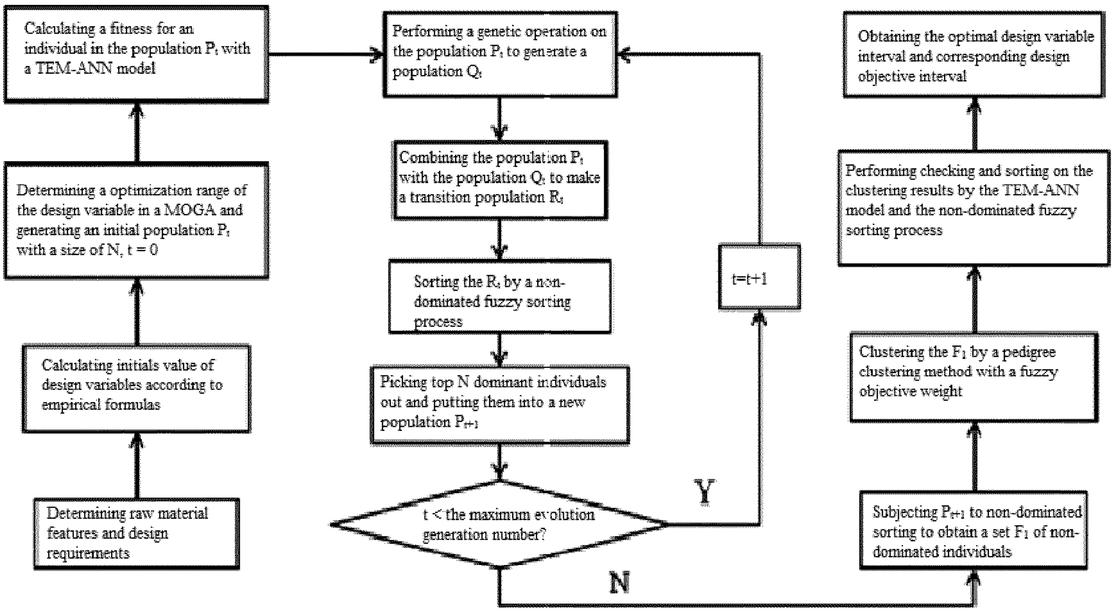
Calculating a fitness for an individual in the population $P_t$ with a TEM-ANN model
Performing a genetic operation on the population $P_t$ to generate a population $Q_t$
Obtaining the optimal design variable interval and corresponding design objective interval
Combining the population $P_t$ with the population $Q_t$ to make a transition population $R_t$
Determining a optimization range of the design variable in a MOGA and generating an initial population $P_t$ with a size of N, t = 0
Performing checking and sorting on the clustering results by the TEM-ANN model and the non-dominated fuzzy sorting process
t=t+1
Sorting the $R_t$ by a non-dominated fuzzy sorting process
Calculating initials value of design variables according to empirical formulas
Picking top N dominant individuals out and putting them into a new population $P_{t+1}$
Clustering the $F_1$ by a pedigree clustering method with a fuzzy objective weight
Y
Determining raw material features and design requirements
t < the maximum evolution generation number?
Subjecting $P_{t+1}$ to non-dominated sorting to obtain a set $F_1$ of non-dominated individuals
N

Fig. 1

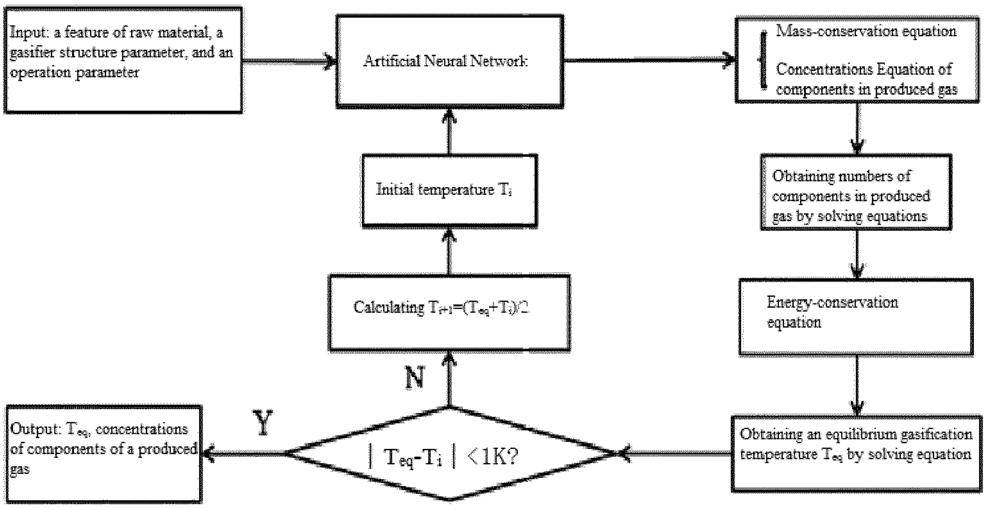
Input: a feature of raw material, a gasifier structure parameter, and an operation parameter
Artificial Neural Network
Mass-conservation equation
Concentrations Equation of components in produced gas
Initial temperature $T_i$
Obtaining numbers of components in produced gas by solving equations
Calculating $T_{i+1}=(T_{eq}+T_i)/2$
Energy-conservation equation
N
Y
Output: $T_{eq}$, concentrations of components of a produced gas
$|T_{eq}-T_i|<1K$?
Obtaining an equilibrium gasification temperature $T_{eq}$ by solving equation

Fig. 2

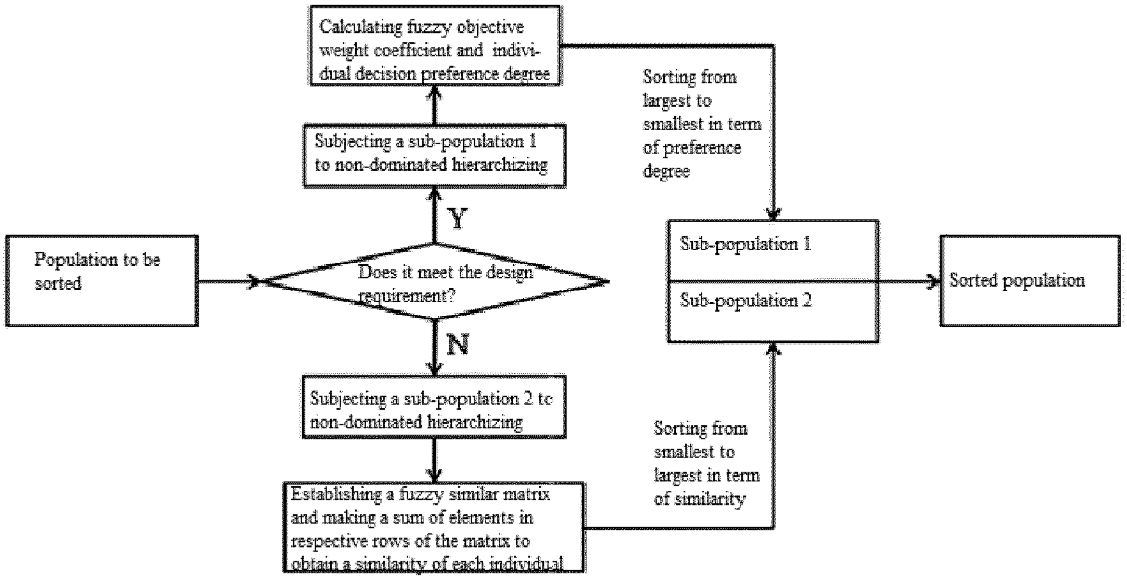
Calculating fuzzy objective weight coefficient and individual decision preference degree
Subjecting a sub-population 1 to non-dominated hierarchizing
Y
Population to be sorted
Does it meet the design requirement?
N
Subjecting a sub-population 2 to non-dominated hierarchizing
Establishing a fuzzy similar matrix and making a sum of elements in respective rows of the matrix to obtain a similarity of each individual
Sorting from largest to smallest in term of preference degree
Sub-population 1
Sub-population 2
Sorted population
Sorting from smallest to largest in term of similarity

Fig. 3

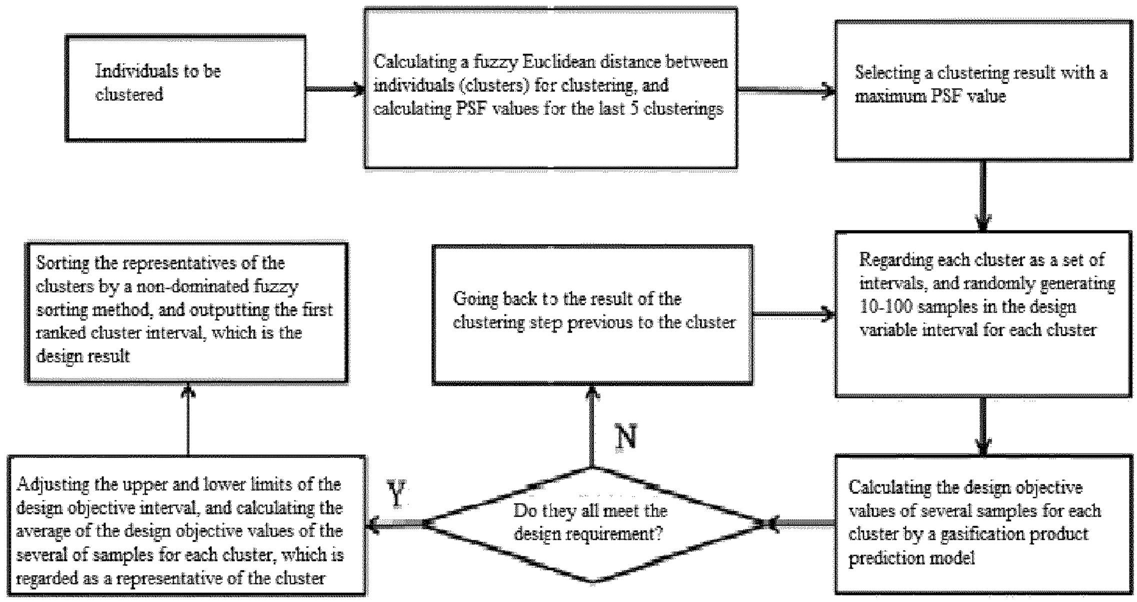
Individuals to be clustered
Calculating a fuzzy Euclidean distance between individuals (clusters) for clustering, and calculating PSF values for the last 5 clusterings
Selecting a clustering result with a maximum PSF value
Regarding each cluster as a set of intervals, and randomly generating 10-100 samples in the design variable interval for each cluster
Going back to the result of the clustering step previous to the cluster
Sorting the representatives of the clusters by a non-dominated fuzzy sorting method, and outputting the first ranked cluster interval, which is the design result
Calculating the design objective values of several samples for each cluster by a gasification product prediction model
Do they all meet the design requirement?
N
Y
Adjusting the upper and lower limits of the design objective interval, and calculating the average of the design objective values of the several of samples for each cluster, which is regarded as a representative of the cluster

Fig. 4

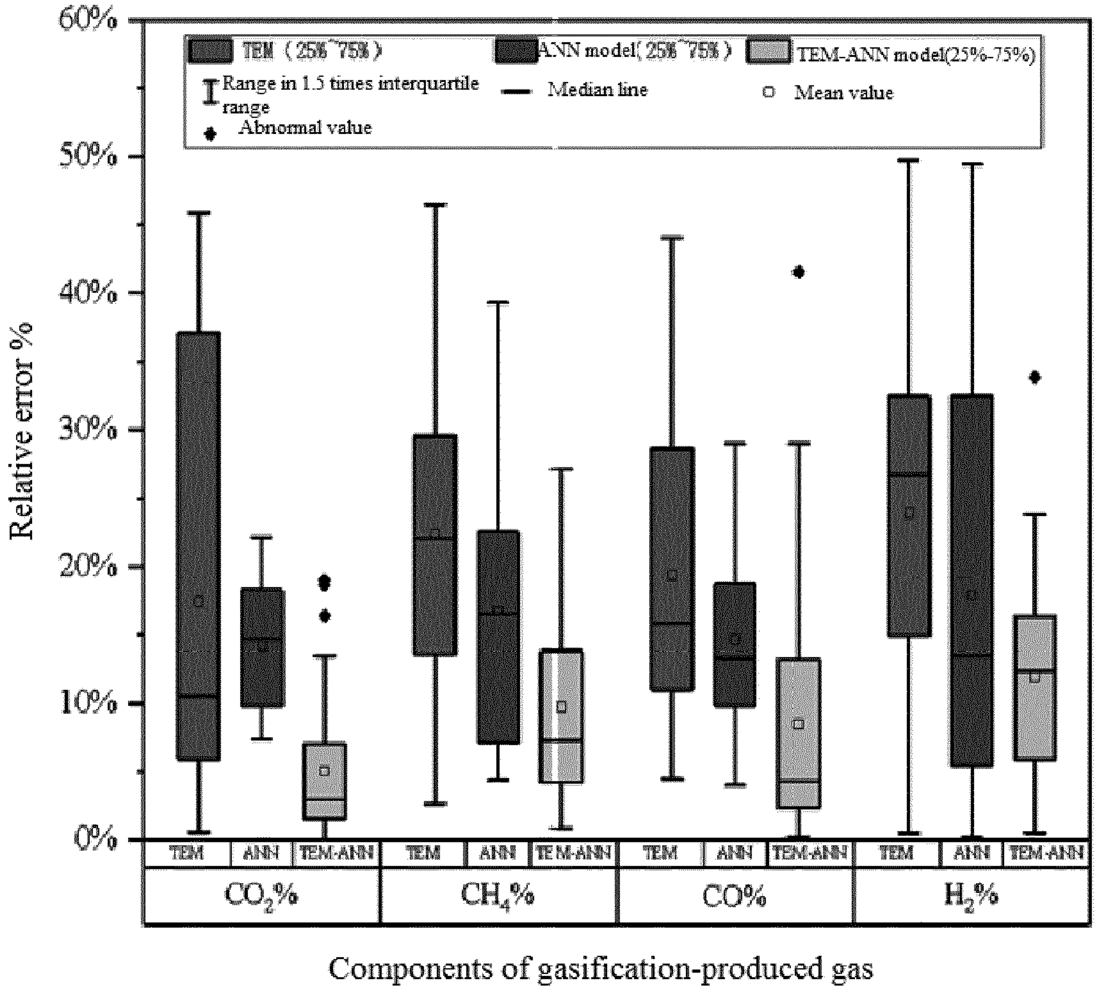

60%
50%
40%
30%
20%
10%
0%
Relative error %
TEM (25%~75%)
ANN model(25%~75%)
TEM-ANN model(25%-75%)
Range in 1.5 times interquartile range
Median line
Mean value
Abnormal value
TEM
ANN
TEM-ANN
CO2%
CH4%
CO%
H2%
Components of gasification-produced gas


Fig. 5

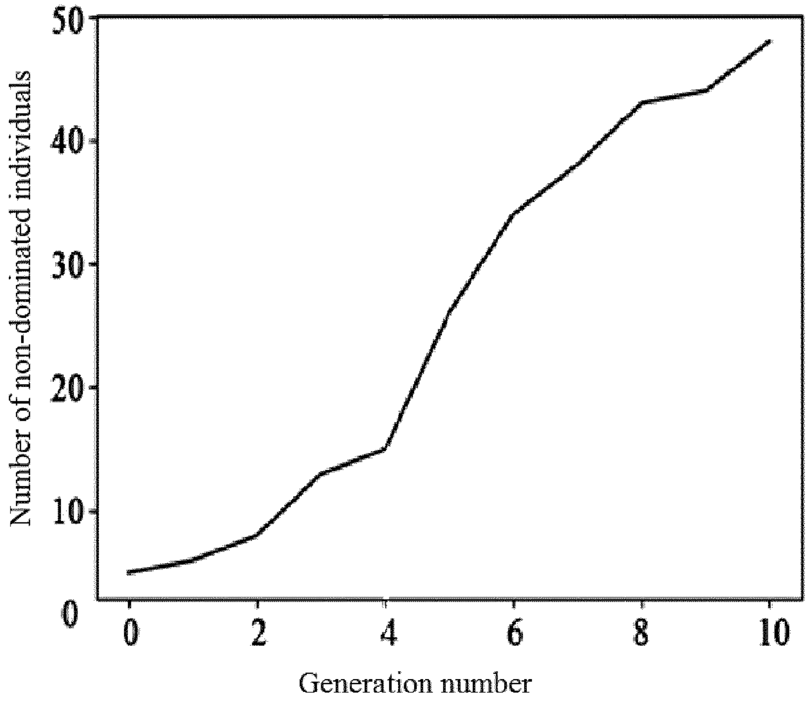

50
40
30
20
10
0
Number of non-dominated individuals
0
2
4
6
8
10
Generation number


Fig. 6

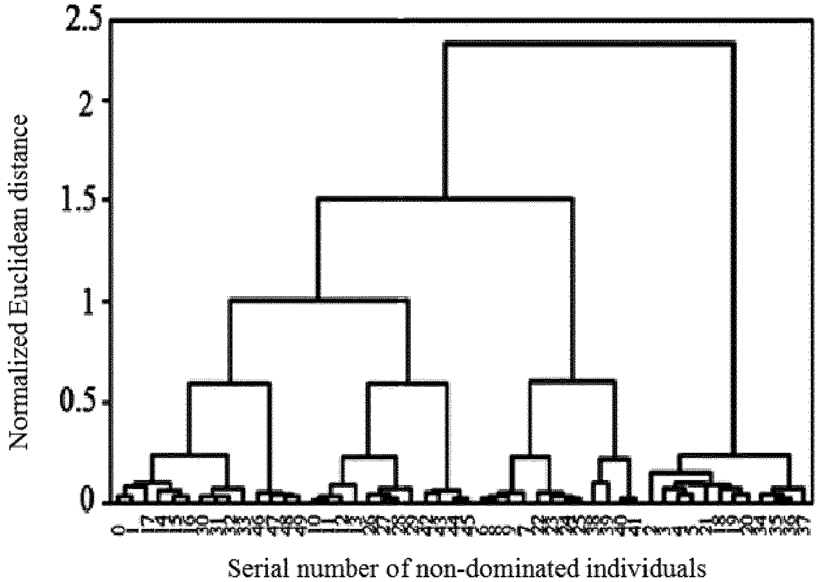

2.5
2
1.5
1
0.5
0
Normalized Euclidean distance
Serial number of non-dominated individuals


Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 105678798 A
- CN 105426965 A
- CN 109988653 A

### Non-patent literature cited in the description

- **SUNANDA DAS et al.** discloses a multi-objective genetic optimization process using non-dominated ranking of individuals and fuzzy clustering. *Optimal Set of Overlapping Clusters Using Multi-objective Genetic Algorithm*, 2017, vol. 92, ISBN 978-1-4503-4817-1, 24
- **DEB et al.** discloses a non-dominated fuzzy sorting method in ''A fast and elitist multiobjective genetic algorithm: NSGA-II. *IEEE TRANSACTIONS ON EVOLUTIONARY COMPUTATION*, April 2002, vol. 6 (2)
- **FRANK NIELSEN**. Introduction to HPC with MPI for Data Science